# EUROPEAN PATENT SPECIFICATION

(11) **EP 0 738 949 B1**
(45) Date of publication and mention of the grant of the patent: **06.02.2002**
(21) Application number: 95116568.7
(22) Date of filing: 20.10.1995
(51) Int. Cl.: G06F 3/00, G06F 3/12

(54) **Reconstruction of print job in print system**
Wiederherstellung eines Druckerauftrages in einem Druckersystem
Reconstruction d'une tâche d'impression dans un système d'impression

(30) Priority: 19.04.1995 JP 11798495
(43) Date of publication of application: 23.10.1996
(73) Proprietor: FUJI XEROX CO., LTD., Minato-ku Tokyo 107 (JP)
(72) Inventor: Nakazawa, Toshiya, c/o Fuji Xerox Co., Ltd., Takatsu-ku, Kawasaki-shi, Kanagawa (JP)
(74) Representative: Grünecker, Kinkeldey, Stockmair & Schwanhäusser Anwaltssozietät

(56) References cited:
- EP-A- 0 588 513
- EP-A- 0 618 529

## Description

### BACKGROUND OF THE INVENTION

### 1. Field of the Invention

This invention relates to a print system comprising a print server, one or more clients, and one or more printers connected via a network and in particular to a print system which executes a print request issued from each client to each printer through the print server and enables the printer to provide a function that the printer itself does not originally have by support of the print server.

### 2. Description of the Related Art

Various types of printers often coexist in a network environment in which a plurality of clients and a plurality of printers are connected to a network. Thus, if the client user requests a given printer to print by a given print method, the print method does not match print service of the printer and the print result as desired by the client user cannot be provided. For example, although the user specifies enlargement, reduction, or so-called n-up (a function of printing n-page print data on a sheet of paper), if the printer cannot provide the specified print service, the print result as desired by the user cannot be provided. To select a printer, the user must know which printer executes what print service by what method for selecting the printer fitted to the print job; printer selection is troublesome. Further, printer selection flexibility also lessens.

In the prior art disclosed in EP 0588513, a print system is mentioned in which a print server receives print jobs from clients via a network and supports printers via said network. If a specified printer does not support the print method specified by the user at a client, the print server sends a fault message to the client.

EP 0618529 discloses a printing system in which a print server receives via a first network print jobs written in a first file format due to a first operating system from a client, supports via a second network printers operating with second operating system, and converts said print jobs according to the second operating system to a second file format, which can be executed by said printers.

### SUMMARY OF THE INVENTION

It is therefore an object of the invention to provide a print system which even if a printer does not support a print method specification of a client in an environment in which a print server, one or more clients, and one or more printers are connected via a network, enables the printer to print by the print method under support of the print server.

According to a first aspect of the invention, there is provided a print system comprising a print server, one or more clients, and one or more printers connected on a network, the print server comprising: means for accepting a print job having job information containing execution printer specification information and print method specification information and a print file, sent from the client; means for reconstructing the print job so that, of the print methods specified in the print method specification information of the job information, a print method with which the printer specified in the execution printer specification information of the job information is not provided is provided as a method available with the printer; and means for sending the reconstructed print job to the printer specified in the execution printer specification information of the job information.

According to a second aspect of the invention, there is provided a print server connected to one or more clients and one or more printers via a network, the print server comprising: means for accepting a print job having job information containing print execution printer specification information and print method specification information and a print file, sent from the client; means for reconstructing the print job so that, of the print methods specified in the print method specification information of the job information, a print method with which the printer specified in the execution printer specification information of the job information is not provided is provided as a method available with the printer; and means for sending the reconstructed print job to the printer specified in the execution printer specification information of the job information.

According to a third aspect of the invention, there is provided a print method using a print server, one or more clients, and one or more printers connected on a network, the print server executing the steps of: accepting a print job having job information containing print execution printer specification information and print method specification information and a print file, sent from the client; reconstructing the print job so that, of the print methods specified in the print method specification information of the job information, a print method with which the printer specified in the execution printer specification information of the job information is not provided is provided as a method available with the printer; and sending the reconstructed print job to the printer specified in the execution printer specification information of the job information.

According to a fourth aspect of the invention, there is provided a print method using a print server, one or more clients, and one or more printers connected on a network, the method comprising the steps of: sending by the client a print job including at least a print file and job information containing execution printer specification information and print page specification information to the print server; sending by the print server, data contained in the print file and specified in the print page specification information to the printer specified in the execution printer specification information; and printing the data by the specified printer.

According to a fifth aspect of the invention, there is provided a print system comprising a print server, one or more clients, and one or more printers connected on a network, the print server comprising: means for accepting a print job including at least a print file and job information containing execution printer specification information and print page specification information, sent from the client; and means for sending data contained in the print file and specified in the print page specification information to the printer specified in the execution printer specification information.

According to a sixth aspect of the invention, there is provided a computer program product that can be executed by a computer for controlling the computer for executing the steps of: accepting a print job having job information containing execution printer specification information and print method specification information and a print file; reconstructing the print job so that, of the print methods specified in the print method specification information of the job information, a print method with which the printer specified in the execution printer specification information of the job information is not provided is provided as a method available with the printer; and sending the reconstructed print job to the printer specified in the execution printer specification information of the job information.

### BRIEF DESCRIPTION OF THE DRAWINGS

In the accompanying drawings:
Figure 1 is a block diagram showing the main part of an embodiment of the invention;
Figure 2 is a block diagram showing a network system to which the embodiment of the invention is applied;
Figure 3 is a block diagram showing the configuration of a job output section in the main part of the embodiment of the invention;
Figure 4 is a general flowchart showing the operation of the embodiment of the invention;
Figure 5 is a flowchart showing the printer registration operation of the embodiment of the invention;
Figure 6 is a general flowchart showing a print job process of the embodiment of the invention;
Figure 7 is a flowchart explaining the operation of the job output section of the embodiment of the invention;
Figure 8 is a flowchart explaining the operation of a job reconstruction section of the job output section of the embodiment of the invention;
Figure 9 is an illustration showing an example of job information according to the embodiment of the invention;
Figure 10 is an illustration explaining the result of print executed according to the job information in Figure 9;
Figure 11 is an illustration showing an example of print information of the embodiment of the invention;
Figure 12 is an illustration showing simplified definition of the print information in Figure 11;
Figure 13 is an illustration showing a job reconstruction example in the embodiment of the invention;
Figure 14 is a flowchart explaining the job correction operation of the embodiment of the invention; and
Figure 15 is a flowchart explaining the job cancellation operation of the embodiment of the invention.

### DETAILED DESCRIPTION OF THE PREFERRED EMBODIMENT

Referring now to the accompanying drawings, there is shown a preferred embodiment of the invention.

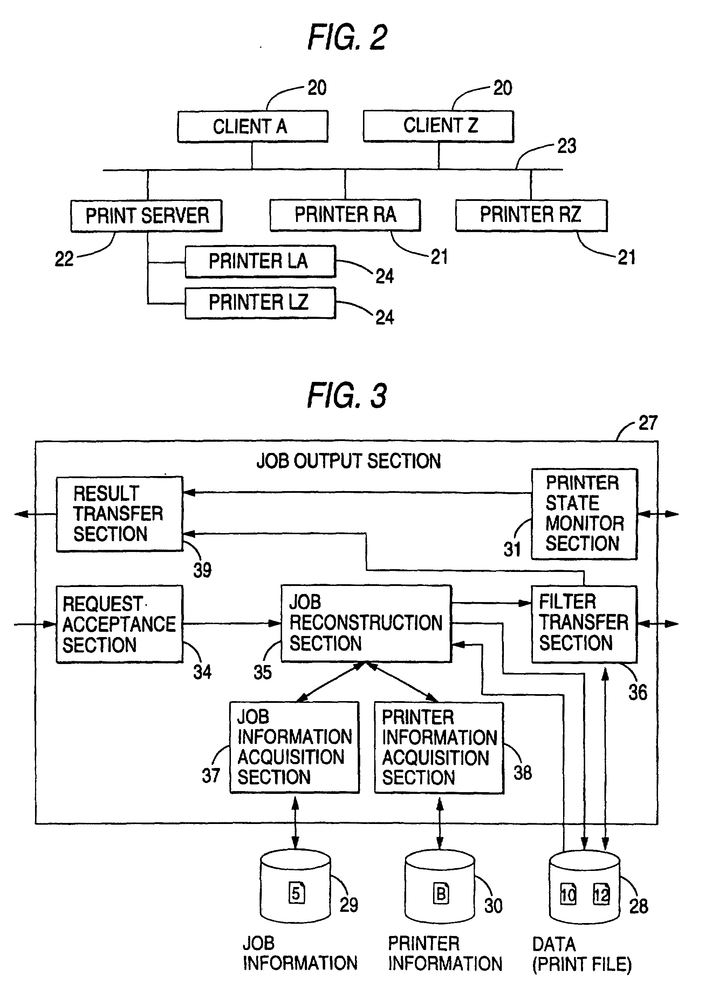

Figure 2 is a whole block diagram showing a network system formed by the embodiment, wherein a plurality of clients 20, a plurality of printers 21, and a print server 22 are connected to a network 23. A plurality of printers 24 are connected directly to the print server 22. Each client 20 sends a print job to the print server 22 via the network 23. The print server 22 uses the printer 21 or 24 specified by the client 20 for printing. That is, when the printer 24 is specified, the print job is sent directly to the printer 24; when the printer 21 is specified, the print job is redirected to the printer 21 via the network 23. When the print job passes through the print server, it is reconstructed if necessary. This topic will be described later in detail.

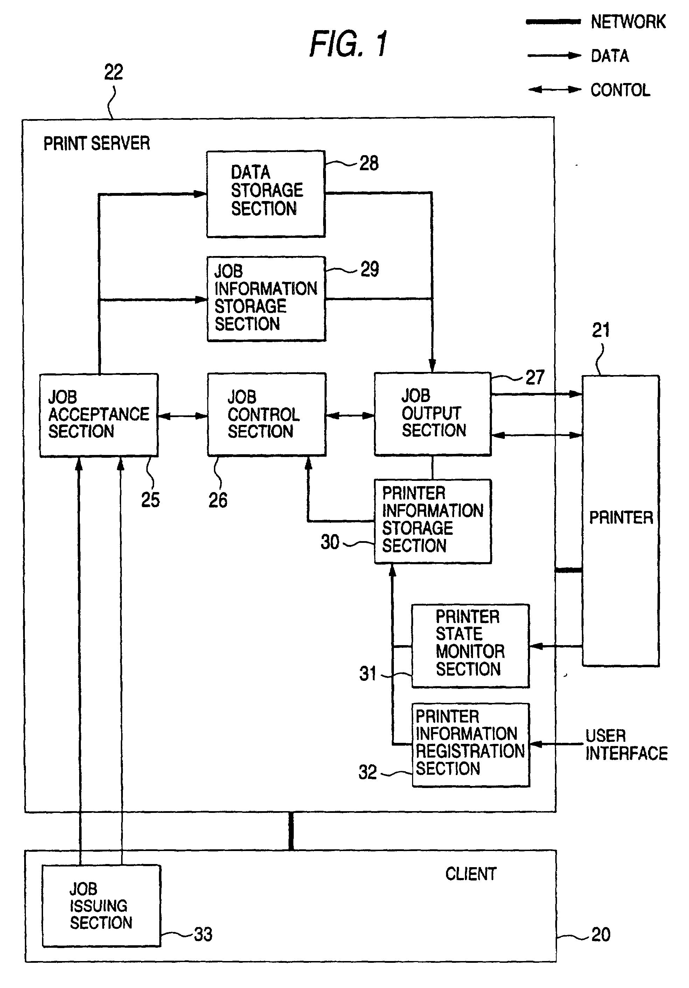

Figure 1 is a block diagram centering on the configuration of the print server 22, wherein the print server 22 has a job acceptance section 25, a job control section 26, a job output section 27, a data storage section 28, a job information storage section 29, a printer information storage section 30, a printer state monitor section 31, and a printer information registration section 32. The client 20 has a job issuing section 33.

The job issuing section 33 of the client 20 sends a printer job consisting of a print file and job information to the print server 22. The job information contains user-specified information, such as information concerning the number of copies, paper size, enlargement or reduction, page specification, and n-up.

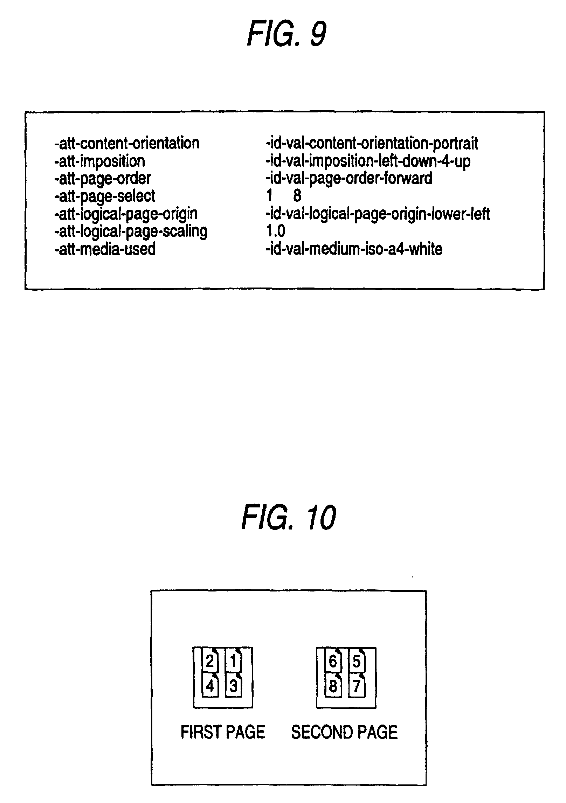

The job information is described, for example, in a format as shown in Figure 9. In this example, portrait as the print direction, 4-up, forward page order, pages 1-8, equal scaling, and A4-size paper are specified. If normal print is executed based on the job information, the print result as shown in Figure 10 is provided.

The printer information registration section 32 in Figure 1 has a predetermined user interface function through which supported printers 21 and 24 and printer attributes can be specified. Various specifications are held in the printer information storage section 30. The printer information registration section 32 will be discussed later in detail. The printer state monitor section 31 communicates with the printer periodically in accordance with a protocol described below, detects an abnormal condition in the printer 24 or a communication path, and notifies the job control section 26 of a normal or abnormal condition.

When the job issuing section 33 of the client 20 issues a print job, the job acceptance section 25 of the print server 22 accepts it, supplies the print file and job information contained in the print job to the data storage section 28 and the job information storage section 29 respectively, and notifies the job control section 26 of acceptance of the print job. The job control section 26 schedules print job execution and rejects sending the print job to an abnormal printer based on detection of the printer state monitor section 31. The job control section 26 supplies the print job to the job output section 27 according to the scheduling. The job output section 27, which is provided for each of the printers 21 and 24, executes job reconstruction described below, if necessary, before transferring the print job to the printer 21 or 24.

Figure 3 is a block diagram showing the configuration of the job output section 27, which has a request acceptance section 34, a job reconstruction section 35, a file transfer section 36, a job information acquisition section 37, a printer information acquisition section 38, a printer state monitor section 31, and a result transfer section 39. The request acceptance section 34 sends a job accepted from the job control section 26 (Figure 1) to the job reconstruction section 35, which then reconstructs the job, if necessary, based on printer information provided from the printer information acquisition section 38 and job information provided from the job information acquisition section 37, and transfers it to the file transfer section 36, which then transfers the job to the printer. In Figure 3, the printer state monitor section 31 is provided in the job output section 27, because the printer state is detected using the print protocol executed by the job output section 27, as described below. Of course, the printer state monitor section 31 may be provided independently of the job output section 27, as shown in Figure 1.

Next, the operation of the embodiment will be discussed.

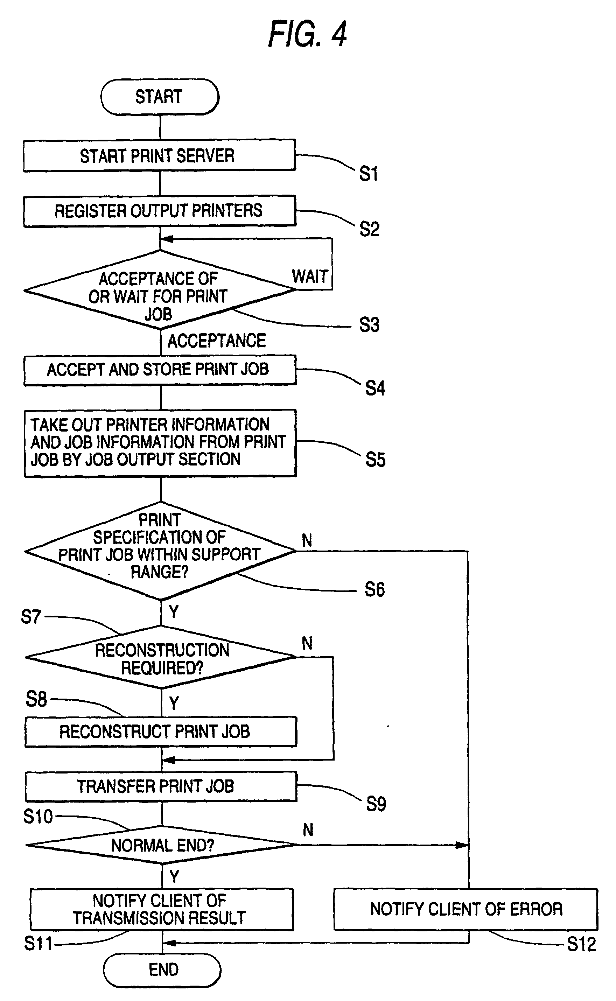

Figure 4 is a general flowchart showing the operation of the embodiment of the invention. In the figure, first the print server 20 is started at step S1. Next, printers are registered in the print server 20 at step S2, wherein printers 24 connected directly to the print server 20 and the printers 21 connected via the network are registered together with printer information. Registration of the printer information will be described later in detail. Upon completion of the printer registration, the print server 22 enters the print job wait state at step S3. When a print job is sent from the client 20, it is accepted and stored at step S4. The job output section 27 of the print server 22 takes out printer information and job information from the print job at step S5, and checks whether or not the print job is within the support range at step S6 based on a list of the printer type names and services supported by the job reconstruction section 35 in the printer information, as described below in detail. If the print job is outside the support range, the client 20 is notified of an error and the process terminates at step S12. On the other hand, if the print job is in the support range, further a check is made to see if job reconstruction is required at step S7 based on a list of reconstruction support services in the print information, as described below in detail. If reconstruction is not required, the job is sent directly to the printer at step S9; if reconstruction is required, the job is reconstructed at step S8, then the resultant job is sent to the printer at step S9. If the job is sent normally at step S10, the client is notified of the transmission result at step S11 and the process is terminated; if the job is not sent normally at step S10, the client is notified of an error at step S12 and the process is terminated.

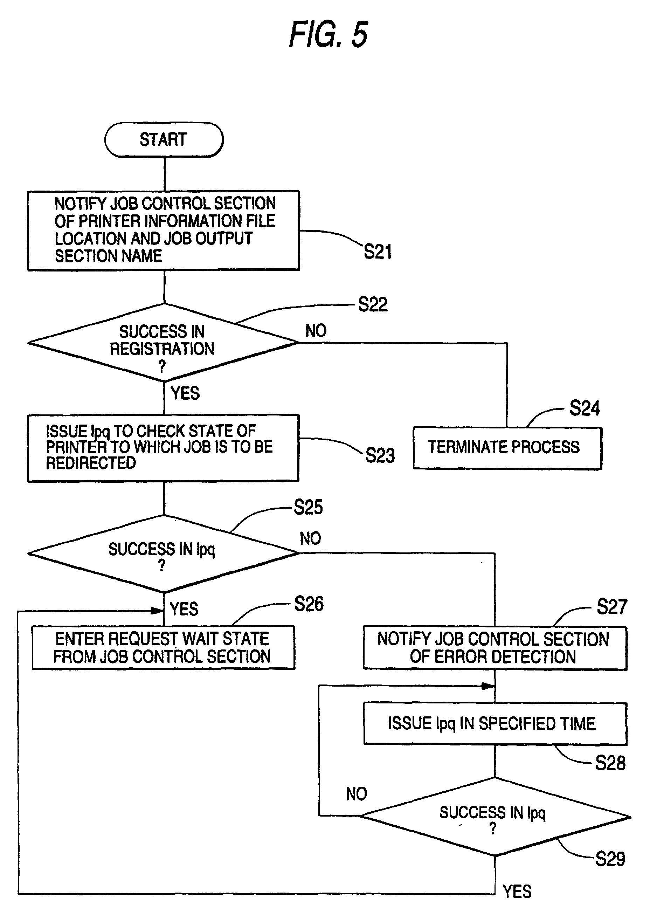

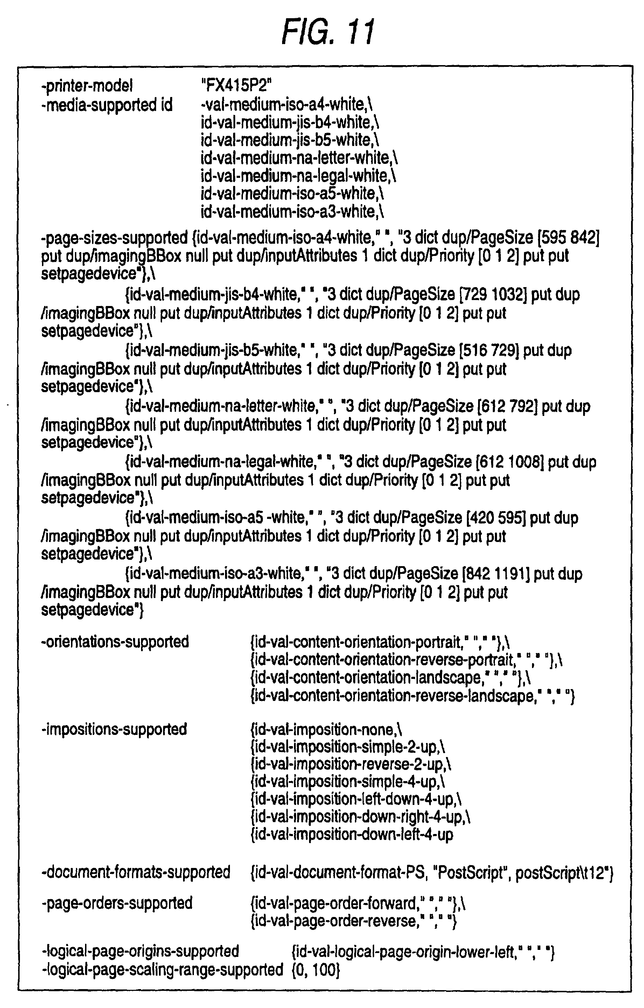

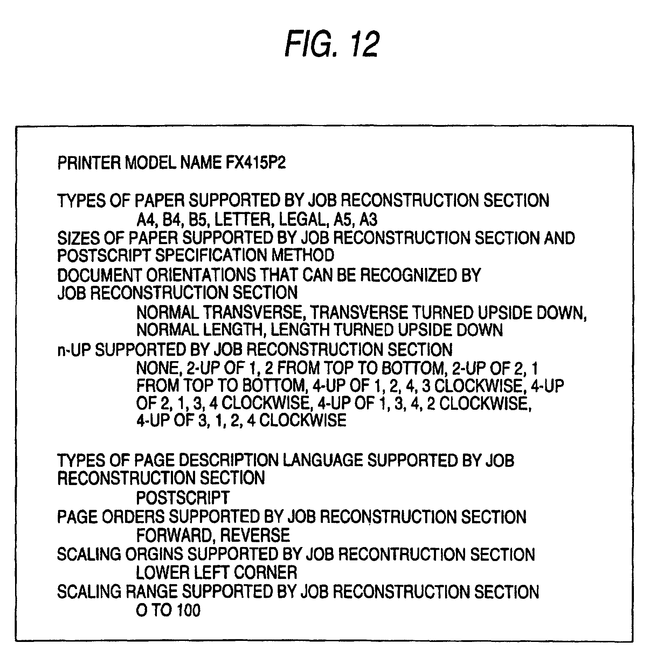

Figure 5 is a flowchart showing the registration process of printers supported by the print server 22 (step S2 in Figure 4). The printers are registered using a predetermined user interface, whereby printer information as shown in Figures 11 and 12 is created for each supported printer. Figure 11 shows an actual definition example and Figure 12 shows what is defined in Figure 11. As shown in the figures, the printer model name and various services supported by the job reconstruction section 35 are defined in the printer information. Upon completion of the registration for each printer, the job output section 27 providing services for each printer in accordance with the registered services is generated. For convenience of the description, only one job output section 27 is shown in the figure.

When the printer information is created for each printer and the corresponding job output sections 27 are generated, each job output section 27 notifies the job control section 26 of the location of the printer information on the assigned printer (location in the printer information storage section 30) and the name of the job output section, and the job control section 26 reads and registers them as internal data at step S21 in Figure 5. When the registration results in failure at step S22, the registration of the printer is canceled at step S24. When the registration results in success at step S22, a check is made to see if the printer and the path to the printer operate normally at step S23. That is, a print request file listing command lpq of a print protocol lpd (Line Printer Deamon Protocol) is sent to the printer to which the job is to be redirected. If the lpq command results in success at step S25, the printer to which the job is to be redirected and the path are normal, then the job output section 27 enters the job wait state from the job control section 26 at step S26. On the other hand, when lpq results in failure at step S25, the job output section 27 notifies the job control section 26 of an error at step S27. Later, lpq is again issued at step S28 and if lpq results in success at step S29, the job output section 27 enters the job wait state from the job control section 26 at step S26. After this, error detection using the lpq is repeated for the job control section 26 to hold the most recent printer and path state information. The printers 24 connected directly to the print server 22 and the related paths are monitored according to the usual procedures proper to the printers.

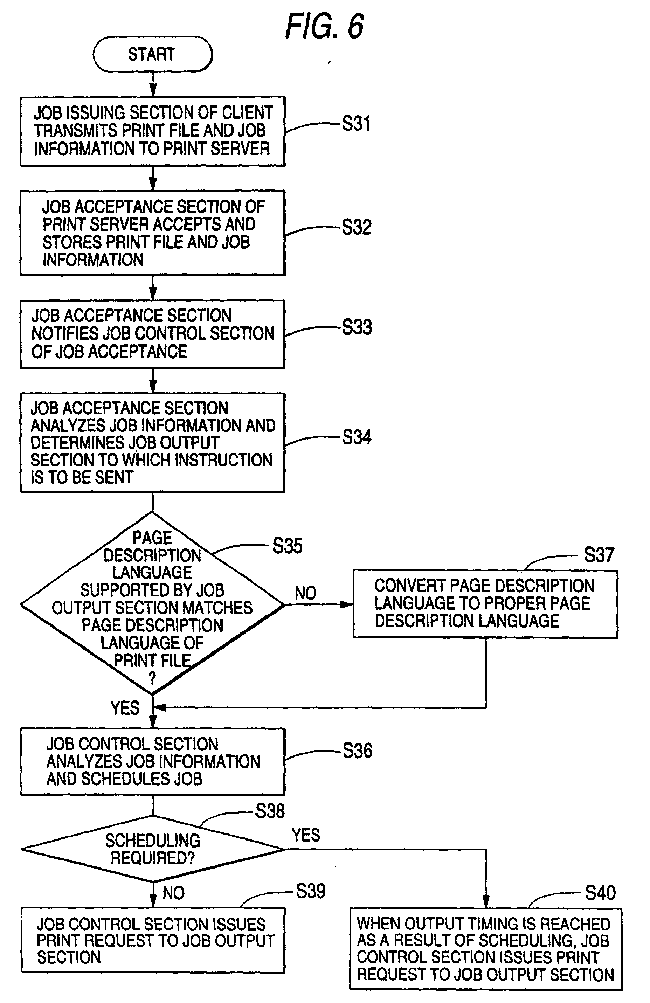

Figure 6 is a flowchart mainly showing the detailed operation of the job issuing section 33 of the client 20 and the job acceptance section 25 and the job control section 26 of the print server 22. In the figure, first the job issuing section 33 of the client 20 sends a print file and job information to the print server 22 at step S31. The job acceptance section 25 of the print server 22 accepts the print file and job information and stores them in the print file storage section 28 and the job information storage section 29 at step S32 and notifies the job control section 26 of acceptance of the job at step S33. Based on the job information, the job control section 26 determines the job output section 27 as the destination at step S34 and checks whether or not the page description language of the print job matches the page description language supported by the job output section 27 at step S35. If they match, the job control section 26 goes to the following step S36; if they do not match, the page description language is converted at step S37. After this, the job control section 26 schedules the job at step S38 and if the job can be executed immediately, the job control section 26 sends it to the job output section 27 at step S39; if the job cannot immediately be executed, the job control section 26 waits until the output timing and then sends the job to the job output section 27 at step S40.

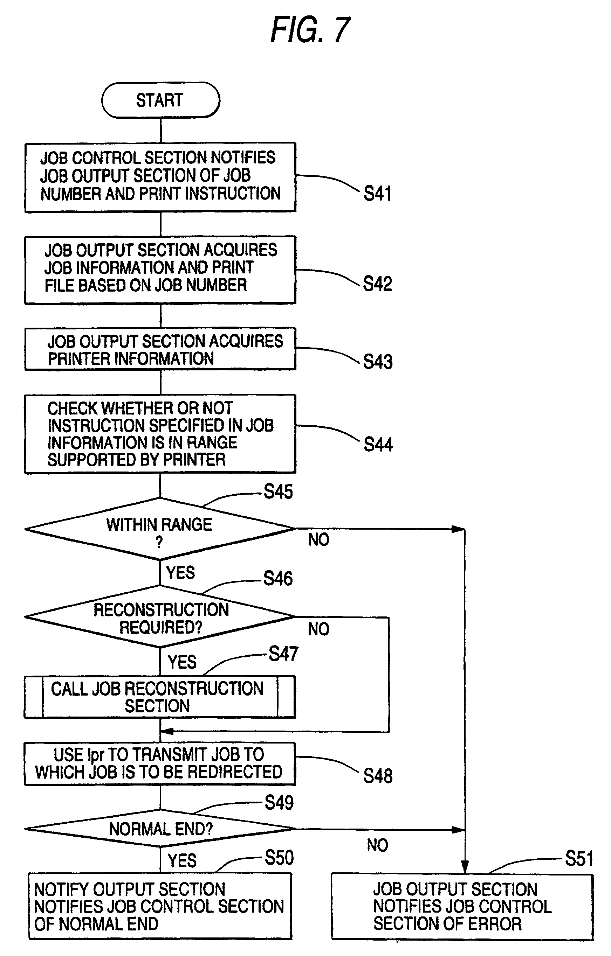

Figure 7 is a flowchart showing the operation of the job output section 27, wherein the job output section 27 accepts a job number and print instruction from the job control section 26 at step S41. The job output section 27 takes out job information and print file from the job based on the job number at step S42 and further gets the corresponding printer information at step S43. After this, the job output section 27 checks whether or not the instruction specified in the job information is within the range supported by the printer (also containing services supported by the job reconstruction section 35 of the job output section 27) at step S44. If it is not in the support range at step S45, the job output section 27 notifies the job control section 26 of an error at step S51; if it is in the support range at step S45, the job output section 27 further checks whether or not reconstruction of the job is required at step S46. If reconstruction of the job is required, the job reconstruction section 35 is called for performing necessary processing for reconstructing the job at step S47. After this, a print request command lpr of the lpd protocol is used to send the job to the printer to which the job is to be redirected at step S48. The job is sent directly to the printer 24 connected directly to the print server 22. If reconstruction of the job is not required, the reconstruction process is skipped and the job is sent. When the job is sent normally at step S49, the job output section 27 notifies the job control section. 26 of the normal end at step S50; if the job is not normally sent at step S49, the job output section 27 notifies the job control section of an error at step S51.

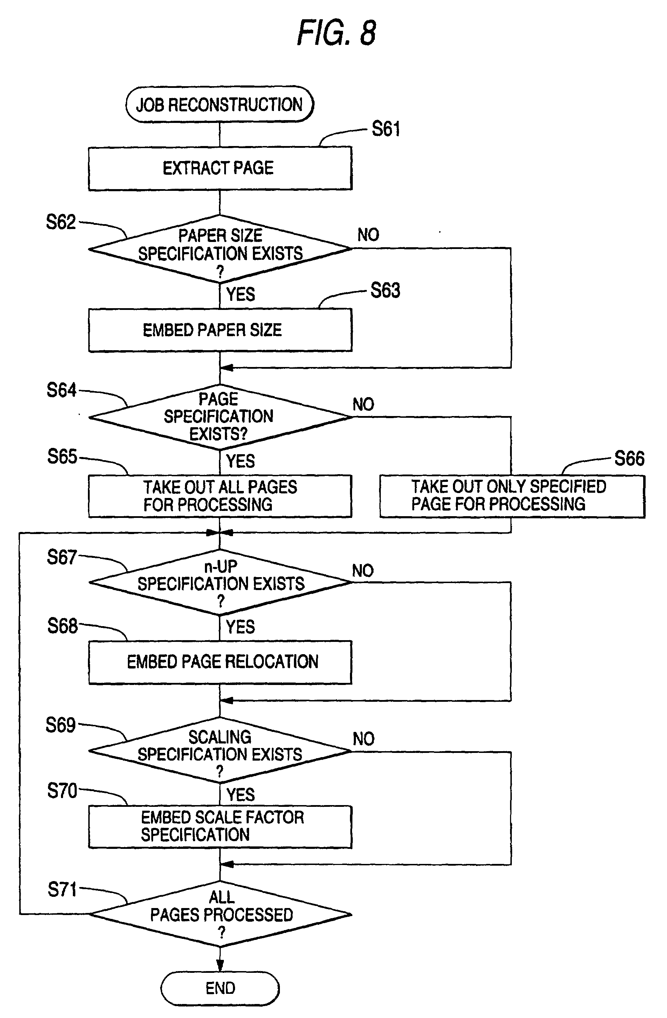

Figure 8 is a flowchart showing the operation of the job reconstruction section 35. In this example in the figure, paper size specification, page specification, n-up specification, and scaling specification are supported by the print server. That is, since a paper size change procedure varies from one printer to another, if paper size specification is contained, the paper size change procedure needs to be embedded in the file. In the example, since the execution printer does not have the n-up, page specification, or scaling function, the print server needs to support the services. Of course, to add other services to the printer, the job needs to be reconstructed in response to the services. For example, the job can be reconstructed so as to print the printer installation place and a message to the user.

In Figure 8, first the print file is taken out in page units at step S61. Next, whether or not paper size specification exists is checked at step S62 and if it exists, a paper size change procedure is embedded in the job at step S63. Next, whether or not page specification exists is checked at step S64. If it exists, only the specified page is taken out for processing at step S66; if not, all pages are taken out for processing at step S65.

Next, whether or not n-up specification exists is checked at step S67. If it exists, a reduction process and a page relocation process are embedded in the job at step S68, as described later in detail. Next, whether or not scaling specification exists is checked at step S69 and if it exists, scale factor specification is embedded in the job at step S70. These steps are executed for all pages and the process is terminated at step S71.

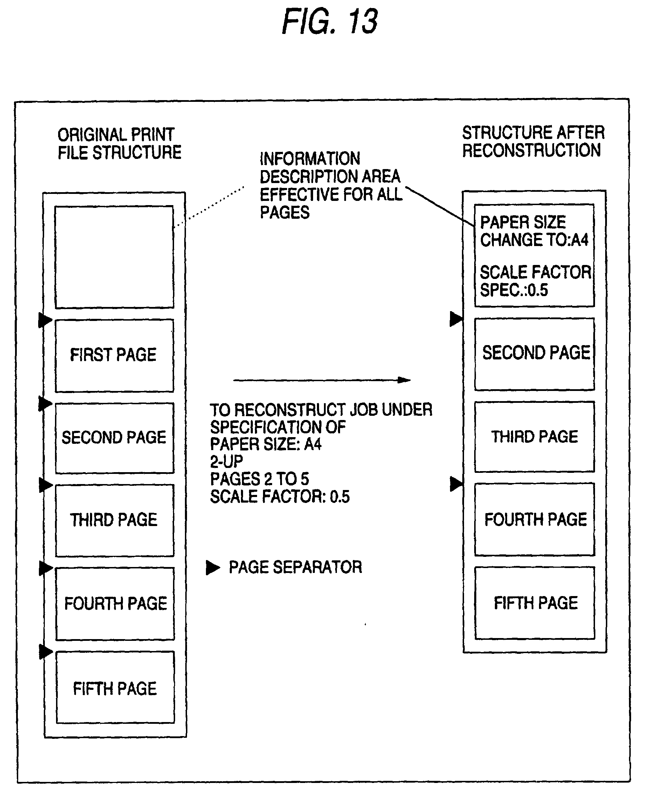

Figure 13 is an illustration explaining the process of the job reconstruction section 35. In this example in Figure 13, the job information contains specification of paper size A4, 2-up, pages 2-5, and 0.5 scaling. The left is an original file and the right is a print file of the job reconstructed. In Figure 13, first the paper size change procedure and the scale factor change procedure are embedded in the leading section of the reconstructed file, next the page end code position is changed. Further, coordinate conversion and scale factor conversion are executed in response to the 2-up (not shown).

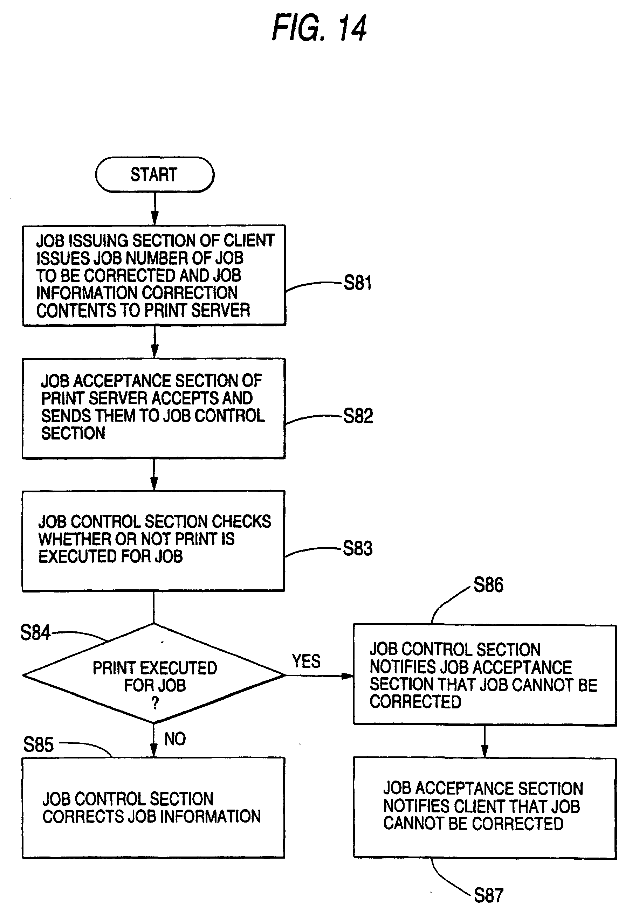

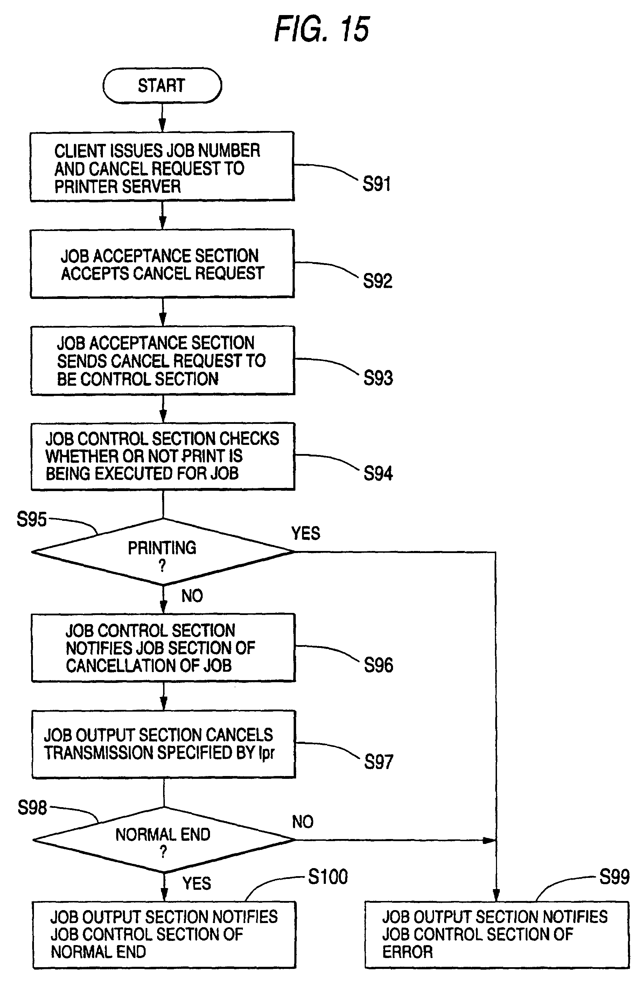

Next, job correction and cancel by the user will be discussed with reference to Figures 14 and 15.

Figure 14 is a flowchart showing job correction by the user. In the figure, if the user specifies job correction, the job issuing section 33 of the corresponding client 20 sends the job number of the job to be corrected and the job information correction contents to the print server 22 at step S81. The job acceptance section 25 of the print server 22 accepts the correction information and sends it to the job control section 26 at step S82. The job control section 26 checks whether or not print is executed for the job to be corrected at step S83 and if print is not executed at step S84, corrects the job information at step S85. If print has been executed, the job control section 26 notifies the job acceptance section 25 that the job cannot be corrected at step S86. The job acceptance section 25 notifies the client 20 that the job cannot be corrected at step S87. In the embodiment, execution pages can be specified in the job information sent together with the print file, in which data other than the execution pages is also contained in the print file; although the page specification is changed with the correction instruction, the print server can cope with it without difficulty.

Figure 15 is a flowchart showing job cancel by the user. In the figure, the client 20 sends the job number of the job to be canceled and a request for canceling the job to the print server 22 at step S91. The job acceptance section 25 accepts the job number and the job cancel request at step S92 and sends them to the job control section 26 at step S93. The job control section 26 checks whether or not print is being executed for the job at step S94. If print is being executed at step S95, the job output section 27 notifies the job control section 26 of an error at step S99. If print is not being executed at step S95, the job control section 26 notifies the job output section 27 of cancel of the job at step S96 and the job output section 27 cancels transmission specified by the print request command lpr of the print protocol at step S97. When the transmission is canceled normally at step S98, the job output section 27 notifies the job control section 26 of the normal cancel at step S100; when the transmission cannot normally be canceled, the job output section 27 notifies the job control section 26 of an error at step S99.

In the actual implementation of the embodiment, the respective sections are provided by software executed in the print server 22, the client 20, and the printers 21 and 24, but some or all of the sections can also be provided by hardware.

As described above, according to the invention, the print server supports the printers connected to the network and if the user specifies a function not inherent in the printer, reconstructs the job so as to replace the function specification with a procedure that can be executed on the printer; the print result as specified by the user can be provided on the printer. Therefore, the printers can be used by the clients as if they were high-function printers, remarkably improving the print environment and also lessening the situation in which the printer for which a job is destined does not have a sufficient function and the job is not executed.

## Claims

1. A print server (22) connected to one or more clients (20) and one or more printers (21, 24) via a network (23), said print server (22) comprising means for accepting a print job having job information containing execution printer specification information and print method specification information and a print file, sent from said client (20);
**characterized by**
said print server (22) further comprising:
means for transforming a first print method, which is specified in the print method specification information, into a second print method, which is supported by the printer (21, 24) specified in the execution printer specification information, when the first print method cannot be executed from the printer (21, 24) specified in the execution printer specification information, and for yielding a transformed print job; and
means for sending the transformed print job to the printer (21, 24) specified in the execution printer specification information.

2. A print system comprising a print server (22) according to claim 1.

3. A print system as claimed in claim 2, wherein said print server (22) further comprises printer registration means for specifying a printer (21, 24) supported by said print server (22) and a print method supported by said print server (22) for the supported printer (21, 24), and wherein said job transforming means provides a procedure for providing the supported print method as a method available with the supported printer (21, 24).

4. The print system as claimed in claim 3, wherein said print server (22) further comprises means for monitoring an operation state of the supported printer (21, 24) and a path on the network (23) from said print server (22) to the supported printer (21, 24).

5. The print system as claimed in claim 4, wherein said monitoring means sends a print request list acquisition command to the printer (21, 24) being monitored.

6. The print system as claimed in claim 2, wherein when the print method specification information of the print job contains paper size specification information, said transforming means transforms the print job with a paper size specification method available with the printer (21, 24) specified in the execution printer specification information.

7. The print system as claimed in claim 2, wherein when the print method specification information of the print job contains print page specification information, said transforming means deletes data on an unspecified page for transforming the print job.

8. The print system as claimed in claim 2, wherein when the print method specification information of the print job contains page relocation specification information, said transforming means transforms the print job so as to relocate a page by a method available with the printer (21, 24) specified in the execution printer specification information.

9. The print system as claimed in claim 2, wherein when the print method specification information of the print job contains scaling specification information, said transforming means transforms the print job so as to execute scaling by a method available with the printer (21, 24) specified in the execution printer specification information.

10. The print system as claimed in claim 2, wherein when accepting a job cancel command, said print server (22) disconnects network connection between said print server (22) and the printer (21, 24) specified in the execution printer specification information.

11. The print system as claimed in claim 2, wherein when accepting a job correction command, said print server (22) corrects the job information based on the job correction command.

12. A print method using a print server (22), one or more clients (20), and one or more printers (21, 24) connected on a network (23), said print server (22) executing the step of accepting a print job having job information containing execution printer specification information and print method specification information and a print file, sent from said client (20);
**characterized by**
said print server (22) further executing the steps of:
transforming a first print method, which is specified in the print method specification information, into a second print method, which is supported by the printer (21, 24) specified in the execution printer specification information, when the first print method cannot be executed from the printer (21, 24) specified in the execution printer specification information, and yielding a transformed print job; and
sending the transformed print job to the printer (21, 24) specified in the execution printer specification information.

13. A computer program product that can be executed by a computer for controlling said computer for executing the step of:
accepting a print job having job information containing execution printer specification information and print method specification information and a print file;
**characterized by**
said computer program product further enables executing the steps of:
transforming a first print method, which is specified in the print method specification information, into a second print method, which is supported by the printer (21, 24) specified in the execution printer specification information, when the first print method cannot be executed from the printer (21, 24) specified in the execution printer specification information, and yielding a transformed print job; and
sending the transformed print job to the printer (21, 24) specified in the execution printer specification information.

## Patentansprüche

1. Druckserver (22), der über ein Netzwerk (23) an einen oder mehrere Klienten (20) und an einen oder mehrere Drucker (21, 24) angeschlossen ist, wobei der Druckserver (22) eine Vorrichtung zur Annahme eines Druckauftrages aufweist, welche Druckinformation enthält, die Ausführungsdruckervorgabeinformation und Druckverfahrenvorgabeinformation sowie eine Druckdatei enthält, und von dem Klienten (20) geschickt wird;
**dadurch gekennzeichnet, daß**
der Druckserver (22) zusätzlich aufweist:
eine Vorrichtung zum Transformieren eines ersten Druckverfahrens, welches in der Druckverfahrenvorgabeinformation angegeben ist, in ein zweites Druckverfahren, das von dem Drucker (21, 24) unterstützt wird, der in der Ausführungsdruckervorgabeinformation angegeben ist, wenn das erste Druckverfahren nicht von dem Drucker (21, 24) ausgeführt werden kann, der in der Ausführungsdruckervorgabeinformation angegeben ist, und zur Bereitstellung eines transformierten Druckauftrages; und
eine Vorrichtung zum Schicken des transformierten Druckauftrages an den Drucker (21, 24), der in der Ausführungsdruckervorgabeinformation angegeben ist.

2. Drucksystem mit einem Druckserver (22) gemäß Anspruch 1.

3. Drucksystem nach Anspruch 2, bei welchem der Druckserver (22) weiterhin eine Druckerregistrierungsvorrichtung zum Angeben eines Druckers (21, 24) aufweist, der von dem Druckserver (22) unterstützt wird, und eines Druckverfahrens, das von dem Druckserver (22) für den unterstützten Drucker (21, 24) unterstützt wird, wobei die Auftragstransformierungsvorrichtung eine Prozedur zur Bereitstellung des unterstützten Druckverfahrens als Verfahren bereitstellt, das bei dem unterstützten Drucker (21, 24) verfügbar ist.

4. Drucksystem nach Anspruch 3, bei welchem der Druckserver (22) weiterhin eine Vorrichtung zur Überwachung eines Betriebszustandes des unterstützten Druckers (21, 24) und eines Weges auf dem Netzwerk (23) von dem Druckserver (22) zu dem unterstützten Drucker (21, 24) aufweist.

5. Drucksystem nach Anspruch 4, bei welchem die Überwachungsvorrichtung einen Druckanforderungslistenakquisitionsbefehl an den überwachten Drucker (21, 24) schickt.

6. Drucksystem nach Anspruch 2, bei welchem, wenn die Druckverfahrenvorgabeinformation des Druckauftrages Papiergrößenvorgabeinformation enthält, die Transformierungsvorrichtung den Druckauftrag mit einem Papiergrößenvorgabeverfahren transformiert, das bei dem Drucker (21, 24) verfügbar ist, der in der Ausführungsdruckervorgabeinformation angegeben ist.

7. Drucksystem nach Anspruch 2, bei welchem, wenn die Druckverfahrenvorgabeinformation des Druckauftrages Druckseitenvorgabeinformation enthält, die Transformationsvorrichtung Daten auf einer nicht angegebenen Seite zum Transformieren des Druckauftrages löscht.

8. Drucksystem nach Anspruch 2, bei welchem, wenn die Druckverfahrenvorgabeinformation des Druckauftrages Seitenverschiebungsvorgabeinformation enthält, die Transformierungsvorrichtung den Druckauftrag so transformiert, daß eine Seite durch ein Verfahren verschoben wird, das bei dem Drucker (21, 24) verfügbar ist, der in der Ausführungsdruckervorgabeinformation angegeben ist.

9. Drucksystem nach Anspruch 2, bei welchem, wenn die Druckverfahrenvorgabeinformation des Druckauftrages Skalierungsvorgabeinformation enthält, die Transformierungsvorrichtung den Druckauftrag so transformiert, daß die Skalierung durch ein Verfahren ausgeführt wird, das bei dem Drucker (21, 24) verfügbar ist, der in der Ausführungsdruckervorgabeinformation angegeben ist.

10. Drucksystem nach Anspruch 2, bei welchem, wenn ein Auftragsannullierungsbefehl angenommen wird, der Druckserver (22) die Netzwerkverbindung zwischen dem Druckserver (22) und dem Drucker (21, 24) unterbricht, der in der Ausführungsdruckervorgabeinformation angegeben ist.

11. Drucksystem nach Anspruch 2, bei welchem, wenn ein Auftragskorrekturbefehl angenommen wird, der Druckserver (22) die Auftragsinformation auf der Grundlage des Auftragskorrekturbefehls korrigiert.

12. Druckverfahren unter Verwendung eines Druckservers (22), eines oder mehrerer Klienten (20), und eines oder mehrerer Drucker (21, 24), die an ein Netzwerk (23) angeschlossen sind, wobei der Druckserver (22) den Schritt ausführt, einen Druckauftrag anzunehmen, der Auftragsinformation enthält, welche Ausführungsdruckervorgabeinformation und Druckverfahrenvorgabeinformation und eine Druckdatei enthält, die von dem Klienten (20) geschickt wird;
**dadurch gekennzeichnet, daß**
der Druckserver (22) weiterhin folgende Schritte ausführt:
Transformieren eines ersten Druckverfahrens, das in der Druckverfahrenvorgabeinformation angegeben ist, in ein zweites Druckverfahren, welches von dem Drucker (21, 24) unterstützt wird, der in der Ausführungsdruckervorgabeinformation angegeben ist, wenn das erste Druckverfahren nicht von dem Drucker (21, 24) ausgeführt werden kann, der in der Ausführungsdruckervorgabeinformation angegeben ist, und Bereitstellung eines transformierten Druckauftrages; und
Senden des transformierten Druckauftrages an den Drucker (21, 24), der in der Ausführungsdruckervorgabeinformation angegeben ist.

13. Computerprogrammprodukt, das von einem Computer ausgeführt werden kann, um den Computer so zu steuem, daß er folgende Schritte ausführt:
Annahme eines Druckauftrages, der Auftragsinformation enthält, welche Ausführungsdruckervorgabeinformation und Druckverfahrenvorgabeinformation sowie eine Druckdatei enthält;
**dadurch gekennzeichnet, daß**
das Computerprogrammprodukt weiterhin die Ausführung folgender Schritte ermöglicht:
Transformieren eines ersten Druckverfahrens, das in der Druckverfahrenvorgabeinformation angegeben ist, in ein zweites Druckverfahren, das von dem Druck (21, 24) unterstützt wird, der in der Ausführungsdruckervorgabeinformation angegeben ist, wenn das erste Druckverfahren nicht von jenem Drucker (21, 24) ausgeführt werden kann, der in der Ausführungsdruckervorgabeinformation angegeben ist, und Bereitstellung eines transformierten Druckauftrages; und
Senden des transformierten Druckauftrages an den Drucker (21, 24), der in der Ausführungsdruckervorgabeinformation angegeben ist.

## Revendications

1. Serveur d'impression (22) relié à un ou plusieurs clients (20) et une ou plusieurs imprimantes (21, 24) par l'intermédiaire d'un réseau (23), ledit serveur d'impression (22) comportant des moyens destinés à accepter un travail d'impression ayant une information de travail contenant une information de spécification d'imprimante d'exécution et une information de spécification de procédé d'impression et un fichier d'impression, envoyé par ledit client (20);
**caractérisé par**
ledit serveur d'impression (22) qui comporte en outre :
des moyens destinés à transformer un premier procédé d'impression, qui est spécifié dans l'information de spécification de procédé d'impression, en un deuxième procédé d'impression, qui est supporté par l'imprimante (21, 24) spécifiée dans l'information de spécification d'imprimante d'exécution, lorsque le premier procédé d'impression ne peut être exécuté par l'imprimante (21, 24) spécifiée dans l'information de spécification d'imprimante d'exécution, et afin de donner un travail d'impression transformé; et
des moyens destinés à envoyer le travail d'impression transformé à l'imprimante (21, 24) spécifiée dans l'information de spécification d'imprimante d'exécution.

2. Système d'impression comportant un serveur d'impression (22) selon la revendication 1.

3. Système d'impression selon la revendication 2, dans lequel ledit serveur d'impression (22) comporte en outre des moyens d'enregistrement d'imprimante destinés à spécifier une imprimante (21, 24) supportée par ledit serveur d'impression (22) et un procédé d'impression supporté par ledit serveur d'impression (22) pour l'imprimante supportée (21, 24), et dans lequel lesdits moyens de transformation de travail procurent une procédure destinée à procurer le procédé d'impression supporté comme procédé disponible avec l'imprimante supportée (21, 24).

4. Système d'impression selon la revendication 3, dans lequel ledit serveur d'impression (22) comporte en outre des moyens destinés à contrôler un état de fonctionnement de l'imprimante supportée (21, 24) et d'un chemin sur le réseau (23) depuis ledit serveur d'impression (22) jusqu'à l'imprimante supportée (21, 24).

5. Système d'impression selon la revendication 4, dans lequel lesdits moyens de contrôle envoient une commande d'acquisition de liste de demande d'impression à l'imprimante (21, 24) qui est contrôlée.

6. Système d'impression selon la revendication 2, dans lequel, lorsque l'information de spécification de procédé d'impression du travail d'impression contient une information de spécification de taille de papier, lesdits moyens de transformation transforment le travail d'impression avec un procédé de spécification de taille de papier disponible avec l'imprimante (21, 24) spécifiée dans l'information de spécification d'imprimante d'exécution.

7. Système d'impression selon la revendication 2, dans lequel, lorsque l'information de spécification de procédé d'impression du travail d'impression contient une information de spécification de page d'impression, lesdits moyens de transformation détruisent des données sur une page non spécifiée afin de transformer le travail d'impression.

8. Système d'impression selon la revendication 2, dans lequel, lorsque l'information de spécification de procédé d'impression du travail d'impression contient une information de spécification d'emplacement de page, lesdits moyens de transformation transforment le travail d'impression de façon à positionner une page grâce à un procédé disponible avec l'imprimante (21, 24) spécifiée dans l'information de spécification d'imprimante d'exécution.

9. Système d'impression selon la revendication 2, dans lequel, lorsque l'information de spécification de procédé d'impression du travail d'impression contient une information de spécification de mise à l'échelle, lesdits moyens de transformation transforment le travail d'impression de façon à exécuter la mise à l'échelle grâce à un procédé disponible avec l'imprimante (21, 24) spécifiée dans l'information de spécification d'imprimante d'exécution.

10. Système d'impression selon la revendication 2, dans lequel, lors de l'acceptation d'une commande d'annulation de travail, ledit serveur d'impression (22) déconnecte la liaison de réseau entre ledit serveur d'impression (22) et l'imprimante (21, 24) spécifiée dans l'information de spécification d'imprimante d'exécution.

11. Système d'impression selon la revendication 2, dans lequel, lors de l'acceptation d'une commande de correction de travail, ledit serveur d'impression (22) corrige l'information de travail sur la base de la commande de correction de travail.

12. Procédé d'impression utilisant un serveur d'impression (22), un ou plusieurs clients (20), et une ou plusieurs imprimantes (21, 24) reliés à un réseau (23), ledit serveur d'impression (22) exécutant les étapes consistant à accepter un travail d'impression ayant une information de travail contenant une information de spécification d'imprimante d'exécution d'impression et une information de spécification de procédé d'impression et un fichier d'impression, envoyé par ledit client (20);
**caractérisé par**
ledit serveur d'impression (22) qui exécute en outre les étapes consistant à :
transformer un premier procédé d'impression, qui est spécifié dans l'information de spécification de procédé d'impression, en un deuxième procédé d'impression, qui est supporté par l'imprimante (21, 24) spécifiée dans l'information de spécification d'imprimante d'exécution, lorsque le premier procédé d'impression ne peut être exécuté par l'imprimante (21, 24) spécifiée dans l'information de spécification d'imprimante d'exécution, et donner un travail d'impression transformé; et
envoyer le travail d'impression transformé à l'imprimante (21, 24) spécifiée dans l'information de spécification d'imprimante d'exécution.

13. Programme informatique qui peut être exécuté par un ordinateur afin de commander ledit ordinateur de façon à exécuter les étapes consistant à :
accepter un travail d'impression ayant une information de travail contenant une information de spécification d'imprimante d'exécution et une information de spécification de procédé d'impression et un fichier d'impression;
**caractérisé par**
ledit programme informatique qui permet en outre l'exécution des étapes consistant à :
transformer un premier procédé d'impression, qui est spécifié dans l'information de spécification de procédé d'impression, en un deuxième procédé d'impression, qui est supporté par l'imprimante (21, 24) spécifiée dans l'information de spécification d'imprimante d'exécution, lorsque le premier procédé d'impression ne peut être exécuté par l'imprimante (21, 24) spécifiée dans l'information de spécification d'imprimante d'exécution, et donner un travail d'impression transformé; et
envoyer le travail d'impression transformé à l'imprimante (21, 24) spécifiée dans l'information de spécification d'imprimante d'exécution.
